# EUROPÄISCHE PATENTSCHRIFT

(11) **EP 2 455 637 B1**
(45) Veröffentlichungstag und Bekanntmachung des Hinweises auf die Patenterteilung: **28.10.2015**
(21) Anmeldenummer: 11405254.1
(22) Anmeldetag: 09.05.2011
(51) Int. Cl.: F16G 11/00, F16G 11/04, E06B 9/327

(54) **Seilhalter zum Befestigen eines Seils an einem Verankerungsteil**
Rope holder for fixing a rope to an anchoring section
Support de corde pour la fixation d'une corde sur un élément d'ancrage

(30) Priorität: 19.11.2010 CH 19442010
(43) Veröffentlichungstag der Anmeldung: 23.05.2012
(73) Patentinhaber: Griesser Holding AG, 8355 Aadorf (CH)
(72) Erfinder: Morvan, Bastian, 06200 Nice (FR)
(74) Vertreter: Gachnang, Hans Rudolf

(56) Entgegenhaltungen:
- EP-A2- 2 031 176
- CH-A5- 695 201
- DE-U1-202008 012 516
- US-A- 4 817 250

## Beschreibung

Gegenstand der Erfindung ist ein Seilhalter zum Befestigen eines Seils an einem Verankerungsteil gemäss dem Oberbegriff des Patentanspruchs 1.

Bei Sonnenschutz- und Blendschutzeinrichtungen wie z.B. Rafflamellenstoren werden verbreitet Führungsseile eingesetzt, um den Behang bzw. die einzelnen Lamellen des Behangs in ihrer jeweiligen Lage zu halten und beim Öffnen und Schliessen des Behangs zu führen. Solche Führungsseile können beispielsweise innerhalb einer Gebäudeaussparung mittels geeigneter Befestigungselemente seitlich an den Laibungen, oben am Sturz, unten an einem Fensterbrett oder hinten an einem Fassaden- oder Wandabschnitt befestigt und gespannt gehalten werden. Für jede dieser unterschiedlichen Befestigungsarten werden speziell für die jeweilige Montageart ausgebildete Befestigungsmittel benötigt.

Aus der DE202008012516U1 ist eine Seilklemme bekannt, die zur Befestigung an Bauteilen ein zylindrisches Gehäuse mit einer gestuften zentrischen Bohrung umfasst, deren Dimensionierung die Aufnahme einer Befestigungsschraube ermöglicht. Durch eine durchgehende Querbohrung dieses Gehäuses kann ein Seil hindurchgeführt werden. Am vorderen Ende der zentrischen Bohrung ist ein Feingewinde ausgebildet, in welches eine Verschlussschraube mit einem Innensechskantantrieb eingeschraubt werden kann. Dadurch wird das Seil festgeklemmt.

Aus der US4817250A ist eine Seilklemme mit zwei Klemmbereichen zum Halten von Zwischenabschnitten eines Seils bekannt. Jeder der beiden Klemmbereiche umfasst einen Hauptkörper mit seitlichen Einführöffnungen, ein im Hauptkörper axial verschiebbar gelagertes becherartiges Verriegelungselement mit radialen Einführöffnungen und eine Druckschraubenfeder (22) zwischen dem Boden des Verriegelungselements und dem Hauptkörper. Ein Seil kann durch die zur Deckung gebrachten Einführöffnungen hindurchgeführt und aufgrund anschliessend aufgrund der wirkenden Federkraft festgeklemmt werden. Insbesondere kann ein Seilende auch durch die Becheröffnung aus der Seilklemme herausgeführt sein.

Die EP2031176A2 offenbart eine Verankerungsvorrichtung zum Verankern eines langgestreckten Führungselements an einer baulichen Abdeckung, umfassend einen an einem Trägerteil befestigbaren Körper mit einer seitlichen Öffnung zum Einführen eines Halteteils, an dem das Führungselement mit einer Schraube gesichert ist.

Eine Aufgabe der vorliegenden Erfindung ist es deshalb, eine Vorrichtung zum Befestigen von Seilen, insbesondere zum Befestigen von Führungsseilen bei Storen oder anderen Sonnen- oder Blendschutzeinrichtungen zu schaffen, mit der ein Seil in mindestens zwei unterschiedlichen Anordnungen an einem Verankerungsteil befestigt werden kann.

Diese Aufgabe wird gelöst durch einen Seilhalter zum Befestigen eines Seils gemäss den Merkmalen des Patentanspruchs 1.

Anhand einiger Figuren wird die Erfindung im Folgenden näher beschrieben. Dabei zeigen
- Figur 1: eine Anordnung eines Seilhalters mit einem darin festgeklemmten Seil in einer ersten Konfiguration,
- Figur 2: eine weitere Anordnung des Seilhalters aus Figur 1 mit einem darin eingespannten Seil in einer zweiten Konfiguration,
- Figur 3: eine Explosionsdarstellung der Anordnung aus Figur 1,
- Figur 4: einen Längsschnitt einer Montagehülse,
- Figur 5: einen Längsschnitt eines Kopfteils.

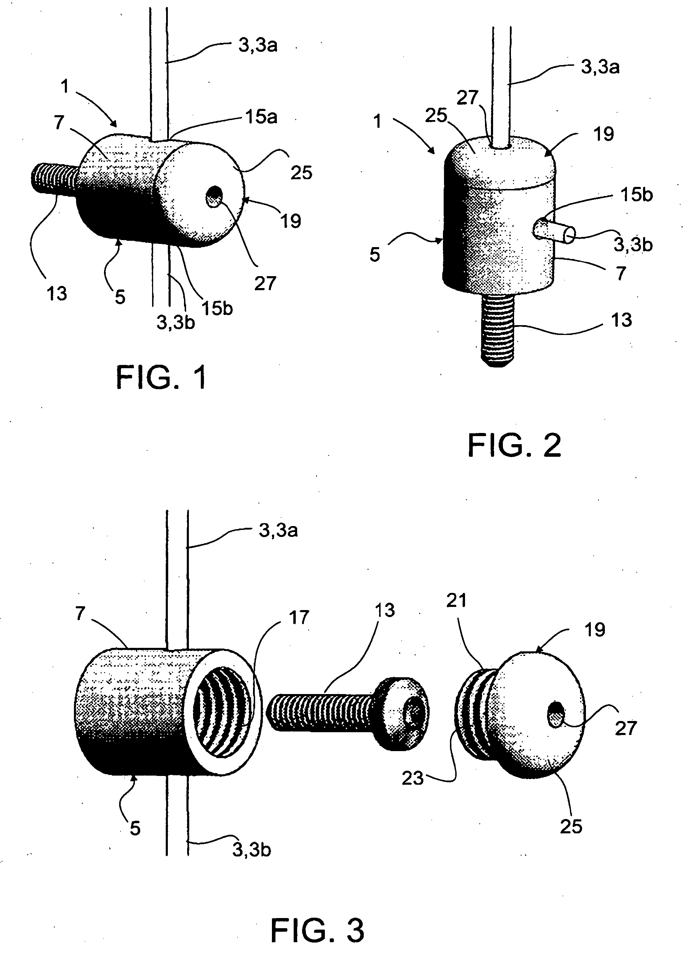

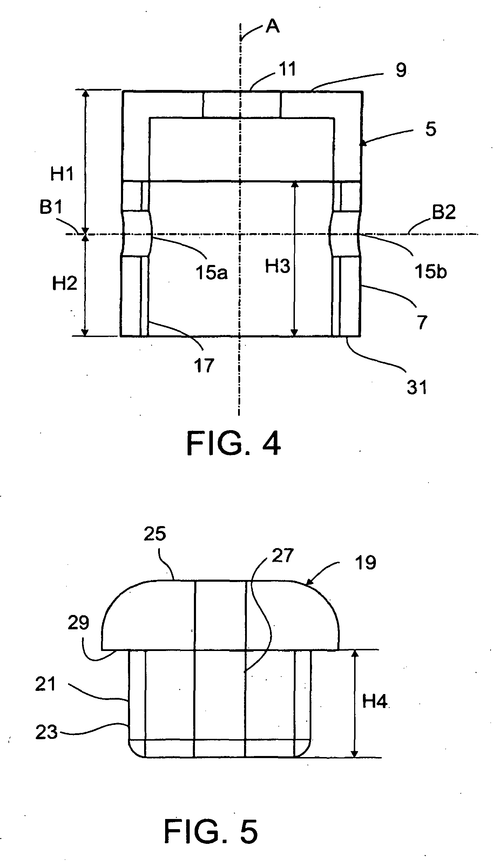

Figur 1 zeigt eine perspektivische Darstellung einer beispielhaften ersten Ausführungsform eines Seilhalters 1 mit einem daran festgeklemmten Seil 3 in einer ersten Konfiguration, wobei die beiden Trume 3a, 3b des Seils 3 kollinear in entgegengesetzten Richtungen am Seilhalter 1 hervorragen. Figur 2 zeigt den Seilhalter 1 aus Figur 1 mit festgeklemmtem Seil 3 in einer zweiten Konfiguration, wobei die beiden hervorragenden Trume 3a, 3b des Seils 3 einen Winkel von etwa 90° einschliessen, und wobei das eine Trum 3a stirnseitig bzw. axial am Seilhalter 1 hervorragt und das andere Trum 3b seitlich bzw. radial. Figur 3 zeigt eine Explosionsdarstellung der Anordnung aus Figur 1 und Figur 4 einen zentralen Längsschnitt des Seilhalters 1. Der Seilhalter 1 umfasst eine Montagehülse 5 mit einem zylindrischen Hülsenmantel 7 und einem rückseitigen Hülsenboden 9 (Figur 4), bei dem vorzugsweise mittig ein Schraubloch 11 zum Hindurchführen einer Schraube 13 ausgenommen ist. Der Hülsenmantel 7 ist zur Frontseite hin offen und umfasst mindestens zwei Radialbohrungen 15a, 15b zum Hindurchführen des Seils 3.

Vorzugsweise haben die Bohrachsen B1, B2 dieser Radialbohrungen 15a, 15b denselben Achsenabstand H1 bezüglich der Rückseite des Hülsenbodens 9 und liegen sich diametral gegenüber. Bezüglich des vorderen Hülsenendes haben die Radialbohrungen 15a, 15b einen Achsenabstand H2. Bei alternativen Ausführungsformen des Seilhalters 1 können die Bohrachsen B1, B2 von zwei oder mehreren Radialbohrungen 15a, 15b auch in beliebigen anderen Winkeln relativ zueinander angeordnet sein. Vorzugsweise durchdringen zwei bis acht Radialbohrungen 15a, 15b den Hülsenmantel 7 mit gleichmässigen Winkelabständen relativ zueinander. Von der Frontseite her ist am Hülsenmantel 7 ein Innengewinde 17 mit einer Länge H3 ausgebildet, wobei diese Länge H3 vorzugsweise grösser ist als der Achsenabstand H2 der Radialbohrungen 15a, 15b. Ein Kopfteil 19 (Figur 5) des Seilhalters 1 umfasst einen zylindrischen Abschnitt 21 mit einem auf das Innengewinde 17 der Montagehülse 5 abgestimmten Aussengewinde 23 und mit einer diesen Abschnitt 21 pilzkopfartig überragenden Abschlusskappe 25. Bei alternativen Ausgestaltungen des Seilhalters 1 könnte auch an der Montagehülse 5 ein Aussengewinde und am Kopfteil 19 ein entsprechendes Innengewinde ausgebildet sein (nicht dargestellt). Eine das Kopfteil 19 vollständig durchdringende axiale Bohrung 27 ermöglicht das Hindurchführen des Seils 3. Die Höhe H4 des zylindrischen Abschnitts 21 ist so bemessen, dass bei vollständig in die Montagehülse 5 eingeschraubtem Kopfteil 19, wobei der ringförmige Absatz 26 der Abschlusskappe 25 an der Stirnseite 31 des Hülsenmantels 7 anliegt, das vordere Ende dieses zylindrischen Abschnitts 21 geringfügig in das lichte Mass der Radialbohrungen 15a, 15b hineinragt. Vorzugsweise sind die Kanten des zylindrischen Abschnitts 21 im Bereich des vorderen Endes angefast bzw. abgerundet, und die Höhe H4 des zylindrischen Abschnitts liegt Bereich zwischen dem Achsenabstandes H2 der Radialbohrungen 15a, 15b von der Stirnseite 31 des Hülsenmantels 7 zuzüglich bzw. abzüglich der Hälfte des Durchmessers der Radialbohrungen 15a, 15b. Dadurch wird sichergestellt, dass ein durch die beiden Radialbohrungen 15a, 15b oder durch eine dieser Radialbohrungen 15a, 15b und die axiale Bohrung 27 im Kopfteil 19 hindurchgeführtes Seil 3 beim Anziehen bzw. Festschrauben des Kopfteils 19 am vorderen Ende des Kopfteils 19 anliegt und von diesem im Bereich der Radialbohrungen 15a, 15b gegen die Montagehülse 5 gepresst wird. Dadurch wird das Seil 3 am Seilhalter 1 festgeklemmt und gegebenenfalls leicht gespannt.

Bei alternativen Ausgestaltungen des Seilhalters 1 kann der vordere Bereich des Kopfteils 19 einen verkleinerten Aussendurchmesser umfassen oder z.B. kugelartig oder kegelstumpfartig ausgebildet sein (nicht dargestellt). Dadurch steht beim Spannen eines eingelegten Seils 3 ein grösserer Hub zur Verfügung. Bei einer weiteren alternativen Ausgestaltung können anstelle von Axialbohrungen 15a, 15b von der Stirnseite 31 des Hülsenmantels 7 her U-förmige Nuten bzw. Kerben im Hülsenmantel 7 ausgenommen sein. Die zu befestigenden Seile 3 müssen dann nicht durch die Axialbohrungen 15a, 15b hindurchgeschlauft werden, sondern können einfach von der Stirnseite 31 her in diese Nuten eingelegt werden.

Mit einem einzigen Typ des Seilhalters 1 kann ein Seil in unterschiedlichen Konfigurationen bzw. mit in unterschiedlichen Richtungen am Seilhalter 1 hervorragenden Trumen 3a, 3b an einem Verankerungsteil befestigt und gegebenenfalls gleichzeitig gespannt werden. Insbesondere ist es möglich, Führungsseile bei Storen oder anderen Sicht-, Blend- oder Wetterschutzeinrichtungen an seitlich, oben oder unten liegenden Verankerungsteilen wie z.B. an einer Fensterlaibung, einer Fensterbank oder einem Fenstersturz auf einfache Weise zu befestigen und zu spannen. Dazu werden zuerst die Montagehülsen 5 an den gewünschten Verankerungsstellen festgeschraubt oder in anderer Weise befestigt. Anschliessend wird das Seil 3 nacheinander bei jedem der Seilhalter 1 durch die der jeweils gewünschten Konfiguration entsprechenden Radialbohrungen 15a, 15b bzw. bei Radialnuten in diese eingelegt und gegebenenfalls durch die axiale Bohrung 27 am jeweiligen Kopfteil 19 hindurchgeführt. Danach wird das Seil 3 an jedem der Seilhalter 1 durch Aufschrauben und Festziehen des jeweiligen Kopfteils 19 fixiert. Selbstverständlich ist es möglich, Montagehülsen 5 mit unterschiedlichen Längen oder Achsenabständen H2 zu verwenden. Auf diese Weise kann eine Vielzahl von Montagevarianten mit nur sehr wenigen Teilen realisiert werden. Das Einspannen der Seile 3 ist in der Regel ohne Werkzeug möglich. Alternativ könnten die Kopfteile 19 z.B. auch Mittel zum Festziehen umfassen, beispielsweise eine Sechskantkontur zum Festziehen mit einem Gabelschlüssel (nicht dargestellt). Die Teile des Seilhalters 1 können aus unterschiedlichen Materialein gefertigt sein, beispielsweise aus Aluminium, legiertem Stahl oder Kunststoff. Anstelle von Seilen 3 können selbstverständlich auch andere flexible, längliche Elemente wie z.B. Schnüre, Saiten oder Drähte mit den Seilhaltern 1 befestigt und gespannt werden.

## Patentansprüche

1. Seilhalter (1) zum Befestigen eines Seils (3) an einem Verankerungsteil, wobei der Seilhalter eine am Verankerungsteil festschraubbare Montagehülse (5) und ein an der Montagehülse (5) festschraubbares Kopfteil (19) umfasst, wobei die Montagehülse (5) einen Hülsenboden (9) mit einem Schraubloch (11) und einen Hülsenmantel (7) mit mindestens zwei Radialbohrungen (15a, 15b) oder entsprechenden stirnseitigen Nuten zum Hindurchführen bzw. Einlegen des Seils (3) umfasst, und wobei am Hülsenmantel (7) ein Innengewinde (17) oder Aussengewinde zum Festschrauben des Kopfteils (19) ausgebildet ist, und wobei das Kopfteil (19) eine Abschlusskappe (25) und einen zylindrischen Abschnitt (21) mit einem mit dem Innengewinde (17) bzw. Aussengewinde der Montagehülse (5) kämmenden Aussengewinde (23) bzw. Innengewinde umfasst, **dadurch gekennzeichnet, dass** die Abschlusskappe (25) eine Bohrung (27) zum Hindurchführen des Seils (3) umfasst.

2. Seilhalter (1) nach Anspruch 1, **dadurch gekennzeichnet, dass** die Radialbohrungen (15a, 15b) oder Nuten gleichmässig verteilt am Hülsenmantel (7) ausgebildet sind.

3. Seilhalter (1) nach einem der Ansprüche 1 oder 2, **dadurch gekennzeichnet, dass** die Höhe H4 des zylindrischen Abschnitts (21) des Kopfteils (19) etwa dem Achsenabstand H2 der Radialbohrungen (15a, 15b) von der Stirnseite (31) des Hülsenmantels (7) bzw. der Tiefe der Nuten entspricht, derart, dass ein durch die Radialbohrungen (15a, 15b) durchgezogenes oder in die Nuten eingelegtes Seil (3) beim Anziehen des Kopfteils (19) zwischen dem Kopfteil (19) und der Montagehülse (5) festklemmbar ist.

4. Seilhalter (1) nach einem der Ansprüche 1 bis 3, **dadurch gekennzeichnet, dass** die Kanten des zylindrischen Abschnitts (21) im Bereich des vorderen Endes angefast bzw. abgerundet sind.

5. Seilhalter (1) nach einem der Ansprüche 1 bis 4, wobei die Montagehülse (5) ein Innengewinde (17) und das Kopfteil (19) ein Aussengewinde (23) umfassen, **dadurch gekennzeichnet, dass** der maximale Aussendurchmesser der Abschlusskappe (25) etwa dem Aussendurchmesser der Montagehülse (5) entspricht.

6. Seilhalter (1) nach einem der Ansprüche 1 bis 4, **dadurch gekennzeichnet, dass** am Kopfteil (19) Mittel zum Festziehen mit einem Werkzeug ausgebildet sind.

## Claims

1. A rope holder (1) for fixing a rope (3) to an anchoring part, the rope holder comprising a mounting sleeve (5) which can be screwed to the anchoring part and a head part (19) which can be screwed to the mounting sleeve (5), the mounting sleeve (5) comprising a sleeve base (9) having a screw hole (11) and a sleeve jacket (7) having at least two radial bores (15a, 15b) or corresponding end-face grooves for feeding through or inserting the rope (3), and an internal thread (17) or external thread being formed on the sleeve jacket (7) for screwing down the head part (19), and the head part (19) comprising an end cap (25) and a cylindrical portion (21) having an external thread (23) or internal thread intermeshing with the internal thread (17) or external thread of the mounting sleeve (5), respectively, **characterised in that** the end cap (25) comprises a bore (27) for feeding through the rope (3).

2. The rope holder (1) according to claim 1, **characterised in that** the radial bores (15a, 15b) or grooves are formed on the sleeve jacket (7) so as to be distributed in a uniform manner.

3. The rope holder according to any one of claims 1 or 2, **characterised in that** the height H4 of the cylindrical portion (21) of the head part (19) approximately corresponds to the centre distance H2 of the radial bores (15a, 15b) from the end face (31) of the sleeve jacket (7) or the depth of the grooves in such a manner that a rope (3) pulled through the radial bores (15a, 15b) or inserted into the grooves can be clamped between the head part (19) and the mounting sleeve (5) when tightening the head part (19) .

4. The rope holder (1) according to any one of claims 1 to 3, **characterised in that** the edges of the cylindrical portion (21) are chamfered or rounded within the region of the front end.

5. The rope holder (1) according to any one of claims 1 to 4, the mounting sleeve (5) comprising an internal thread (17) and the head part (19) an external thread (23), **characterised in that** the maximum external diameter of the end cap (25) approximately corresponds to the external diameter of the mounting sleeve (5).

6. The rope holder (1) according to any one of claims 1 to 4, **characterized in that** means are formed at the head part (19) for tightening using a tool.

## Revendications

1. Support (1) de cordon, dévolu à la fixation d'un cordon (3) à une pièce d'ancrage, ledit support de cordon incluant une douille de montage (5) pouvant être bloquée par vissage sur ladite pièce d'ancrage, et une partie frontale (19) pouvant être bloquée par vissage sur ladite douille de montage (5), ladite douille de montage (5) comprenant un fond (9) percé d'un trou de vissage (11), et une enveloppe (7) munie d'au moins deux perçages radiaux (15a, 15b) ou de rainures correspondantes pratiquées à la face extrême, pour permettre respectivement le passage ou l'insertion dudit cordon (3), un filetage intérieur (17) ou un filetage extérieur étant façonné sur l'enveloppe (7) de la douille, en vue du blocage de la partie frontale (19) par vissage, et ladite partie frontale (19) comprenant un capuchon d'extrémité (25) et un tronçon cylindrique (21) doté, respectivement, d'un filetage extérieur (23) ou d'un filetage intérieur en prise respective avec le filetage intérieur (17) ou le filetage extérieur de ladite douille de montage (5), **caractérisé par le fait que** le capuchon d'extrémité (25) comporte un perçage (27) dédié au passage du cordon (3).

2. Support (1) de cordon, selon la revendication 1, **caractérisé par le fait que** les perçages radiaux (15a, 15b), ou les rainures, sont pratiqué(e)s avec répartition uniforme sur l'enveloppe (7) de la douille.

3. Support (1) de cordon, selon l'une des revendications 1 ou 2, **caractérisé par le fait que** la hauteur H4 du tronçon cylindrique (21) de la partie frontale (19) correspond approximativement à la distance H2 comprise entre les axes des perçages radiaux (15a, 15b) et la face extrême (31) de l'enveloppe (7) de la douille ou, respectivement, à la profondeur des rainures, de telle sorte qu'un cordon (3), parcourant lesdits perçages radiaux (15a, 15b) ou inséré dans lesdites rainures, puisse être coincé fermement entre ladite partie frontale (19) et ladite douille de montage (5) lors du serrage de ladite partie frontale (19).

4. Support (1) de cordon, selon l'une des revendications 1 à 3, **caractérisé par le fait que** les arêtes du tronçon cylindrique (21) sont respectivement biseautées ou arrondies dans la région de l'extrémité antérieure.

5. Support (1) de cordon, selon l'une des revendications 1 à 4, la douille de montage (5) et la partie frontale (19) étant pourvues, respectivement, d'un filetage intérieur (17) et d'un filetage extérieur (23), **caractérisé par le fait que** le diamètre extérieur maximal du capuchon d'extrémité (25) correspond approximativement au diamètre extérieur de la douille de montage (5).

6. Support (1) de cordon, selon l'une des revendications 1 à 4, **caractérisé par le fait que** des moyens sont ménagés, sur la partie frontale (19), en vue du blocage à demeure à l'aide d'un outil.
